# EUROPÄISCHE PATENTANMELDUNG

(11) **EP 1 082 988 A1**
(43) Veröffentlichungstag der Anmeldung: **14.03.2001**
(21) Anmeldenummer: 00119682.3
(22) Anmeldetag: 08.09.2000
(51) Int. Cl.: B01D 21/28, B01D 21/24, C02F 3/12

(54) **Vorrichtung zum Aufkonzentrieren von Belebtschlamm**

(30) Priorität: 10.09.1999 DE 19943263
(71) Anmelder: Munters Euroform GmbH, 52072 Aachen (DE)
(72) Erfinder: Marggraff, Martin, 52146 Würselen (DE); Hölscher, Andre, 52062 Aachen (DE)
(74) Vertreter: Patentanwälte Hauck, Graalfs, Wehnert, Döring, Siemons

(57) **Zusammenfassung**

Es wird eine Vorrichtung zum Aufkonzentrieren von Belebtschlamm beschrieben. Die Vorrichtung umfaßt eine Kammer, durch die der Belebtschlamm geführt wird und die einen Schlammzulauf in einem Endbereich und einen Schlammauslauf in einem anderen Endbereich aufweist. In der Kammer ist eine Vielzahl von mit Abstand voneinander angeordneten horizontalen oder schwach geneigten Lamellen vorgesehen, deren Zwischenräume vom Belebtschlamm durchströmt werden. Zwischen den Lamellen sind parallel zur Hauptströmungsrichtung Abzugsrohre für die Klarphase angeordnet, die mit Abzugsöffnungen versehen sind. Diese Vorrichtung zeichnet sich durch eine besonders hohe spezifische Trennleistung aus.

## Beschreibung

Die vorliegende Erfindung betrifft eine Vorrichtung zum Aufkonzentrieren von Belebtschlamm mit einer Kammer, durch die der Belebtschlamm geführt wird, die in einem Endbereich einen Belebtschlammzulauf und in einem anderen Endbereich einen Auslauf für den konzentrierten Belebtschlamm aufweist.

Bekannte Belebtschlammanlagen werden mit einer Konzentration von 3 bis 5 gTS/l (Trockensubstanz/Liter) betrieben. Je höher der TS-Gehalt im Endprodukt ist, desto größer ist die spezifische Reinigungsleistung (Reinigungsleistung pro Volumeneinheit). Es wird deshalb nach Möglichkeiten gesucht, um den TS-Gehalt zu erhöhen. Mit herkömmlichen Sedimentationsbecken ist dies nicht möglich, oder es werden unverhältnismäßig große Becken benötigt.

Auch der Einsatz von Gegenstromlamellenklärern ist sehr problematisch, da sich Belebtschlamm nur sehr langsam eindickt und dann ein großes Schlammvolumen gegen das einströmende Wasser aus den Lamellen herausfließen muß.

Der vorliegenden Erfindung liegt die Aufgabe zugrunde, eine Vorrichtung der eingangs beschriebenen Art zu schaffen, die sich durch eine besonders hohe spezifische Trennleistung auszeichnet.

Diese Aufgabe wird erfindungsgemäß bei einer Vorrichtung der eingangs wiedergegebenen Art dadurch gelöst, daß in der Kammer eine Vielzahl von mit Abstand voneinander angeordneten horizontalen oder schwach geneigten Lamellen vorgesehen ist, deren Zwischenräume vom Belebtschlamm durchströmt werden, und daß zwischen den Lamellen parallel zur Hauptströmungsrichtung Abzugsrohre für die Klarphase angeordnet sind, die über ihre Länge jeweils mindestens eine Abzugsöffnung für die Klarphase besitzen, auf der Auslaufseite oder Zulaufseite der Hauptströmung geschlossen und auf der gegenüberliegenden Seite offen sind.

Die erfindungsgemäß ausgebildete Vorrichtung arbeitet im Gleichstrom, wodurch die Nachteile des Gegenstromprinzips aufgehoben werden. Der normale Nachteil von Gleichstromlamellen - die schwierigere Abtrennung der Phasen - ist bei der Erfindung nicht von Nachteil, weil eine grobe Separation ausreicht. Nicht die Güte der Klarphase, sondern der TS-Gehalt der Schlammphase und die raumspezifische Leistung sind entscheidend.

Desweiteren erlaubt das Gleichstromprinzip eine schnellere Phasentrennung, so daß höhere Geschwindigkeiten erreicht werden. Bei der Erfindung liegen die einzelnen Abscheideebenen horizontal oder fast horizontal, ohne daß dabei Schlammablagerungen auftreten. Vorzugsweise wird mit besonders hohen Strömungsgeschwindigkeiten gearbeitet.

Die zwischen den Lamellen gebildeten Kanäle werden über den Schlammzulauf mit zu konzentrierendem Belebtschlamm beaufschlagt. Über die parallel zur Hauptströmungsrichtung des Belebtschlammes angeordneten Abzugsrohre, die über ihre Länge jeweils mindestens eine Abzugsöffnung für die Klarphase besitzen, wird die Klarphase abgezogen und über das offene Ende der Rohre entweder gleichläufig mit oder gegenläufig zur Hauptströmungsrichtung des Belegschlammes abgezogen. Der konzentrierte Belebtschlamm wird über den Schlammauslauf aus der Kammer abgeführt.

In Weiterbildung der Erfindung sind die Abzugsrohre für die Klarphase über den den Schlammzulauf aufweisenden Endbereich der Kammer hinaus verlängert und münden in eine von der Aufkonzentrationskammer getrennte Kammer. Die Vorrichtung weist vorzugsweise eine Pumpe zum Abpumpen der Klarphase auf, die zweckmäßigerweise in dieser getrennten Kammer angeordnet ist. Als Alternative ist eine Abführung der Klarphase durch Schwerkraftwirkung möglich, wobei die Klarphase beispielsweise im freien Gefälle einem Nachklärbecken zufließt. Eine derartige getrennte Kammer kann bei gleichläufiger Klarphasenentfernung auch am gegenüberliegenden Kammerende angeordnet sein.

Ein Abzugsrohr für die Klarphase ist zweckmäßigerweise so ausgebildet, daß es eine Vielzahl von im Abstand voneinander angeordneten Abzugsöffnungen aufweist. Bei einer anderen Lösung hat das Abzugsrohr einen sich über seine Länge oder einen Teil seiner Länge erstreckenden Abzugsschlitz. Die Abzugsöffnung(en) ist bzw. sind vorzugsweise im oberen Bereich der Abzugsrohre angeordnet, um zu verhindern, daß die Schlammphase mit in die Abzugsrohre gelangt.

Bei einer besonders bevorzugten Ausführungsform der Erfindung dienen die Abzugsrohre für die Klarphase gleichzeitig als Abstandshalter für die Lamellen. Bei dieser Ausführungsform sind die Abzugsöffnungen zweckmäßigerweise im seitlichen oberen Bereich der Abzugsrohre angeordnet, da die Oberseite der Rohre durch die darüber angeordneten Lamellen blockiert ist. Hierbei steht daher die Oberseite der Rohre direkt mit den darüber angeordneten Lamellen in Kontakt. Bei einer anderen Ausführungsform sind die Rohre auf ihrer Oberseite mit entsprechenden Lamellenstützeinrichtungen versehen, bei denen es sich beispielsweise um einen durchlaufenden Flansch oder um einzelne Stützelemente handeln kann. Diese Einrichtungen stützen dann die darüber befindlichen Lamellen ab und dienen zusammen mit den Rohren als Abstandshalter.

Die Aufkonzentrationskammer weist vorzugsweise in ihrem Endbereich für den Schlammauslauf einen lamellenfreien Raum auf. In diesen Raum münden die zwischen den einzelnen Lamellen befindlichen Schlammströmungskanäle. Vorzugsweise besitzt die Vorrichtung eine die Hauptströmung (Belebtschlammströmung) erzeugende Schlammpumpe, die zweckmaßigerweise in diesem lamellenfreien Raum zugeordnet ist, von dem aus der Schlammauslauf, beispielsweise als Schlammauslaufrohr, abgeführt ist. Die Schlammpumpe ist zweckmäßigerweise gleichzeitig als Schlammrezirkulationspumpe ausgebildet, so daß für den Betrieb der Vorrichtung nur eine einzige Schlammpumpe benötigt wird. Der rezirkulierte Schlamm wird wieder dem Belebtschlammzulauf zugeführt und erneut durch die Vorrichtung umgewälzt.

Die erfindungsgemäß ausgebildete Vorrichtung kann als Neuvorrichtung installiert werden, aber auch in bestehende Anlagen eingesetzt oder eingehängt werden. Hierzu kann das mit den Abzugsrohren versehene Lamellenpaket in einer bereits vorhandenen, mit Schlammzulauf und Schlammauslauf versehenen Kammer angeordnet werden. Bei neuen Anlagen kann unter Umständen eine einzige Schlammpumpe (Rezirkulationspumpe) für mehrere Eindickungsvorrichtungen verwendet werden.

Um eine Strömungsvergleichmäßigung des Belebtschlammes zu erreichen, verengt sich vorzugsweise der Querschnitt der zwischen den Lamellen gebildeten Strömungskanäle in Hauptströmungsrichtung.

Die Abzugslöcher der Abzugsrohre haben normalerweise einen äquidistanten Abstand. Vorzugsweise verringert sich jedoch der Abstand zwischen den Abzugsöffnungen in Hauptströmungsrichtung. Dadurch wird erreicht, daß stromab mehr Klarphase abgezogen wird.

Um die Abzugsrohre zu spülen, kann die Klarphasenpumpe mit umgekehrter Fließrichtung betrieben werden.

Der Klarwasserabzug wird vorzugsweise zyklisch mit kurzen Intervallen durchgeführt.

Die Erfindung wird nachfolgend anhand eines Ausführungsbeispiels in Verbindung mit der Zeichnung im einzelnen erläutert. Es zeigen:
- Figur 1: eine räumliche Ansicht einer Vorrichtung zum Aufkonzentrieren von Belebtschlamm;
- Figur 2: ein Detail der Vorrichtung der Figur 1;
- Figur 3: eine Detaildarstellung einer modifizierten Ausführungsform eines Abzugsrohres mit Lamellen;
- Figur 4: eine Seitenansicht der Vorrichtung der Figur 1;
- Figur 5: einen Vertikalschnitt entlang Linie A-A in Figur 4; und
- Figur 6: einen Vertikalschnitt entlang Linie B-B in Figur 4.

Die in den Figuren dargestellte Vorrichtung zum Aufkonzentrieren von Belebtschlamm umfaßt eine längliche Kammer 1, die - abgesehen von einem Belebtschlammzulauf, einem Auslauf für den konzentrierten Belebtschlamm und einem Klarphasenauslauf - geschlossen ist. Die Kammer 1 hat im Querschnitt Rechteckform. Sie besitzt an ihrer Oberseite und Unterseite einen Belebtschlammzulauf, wie bei 4 gezeigt. Der Belebtschlamm wird somit vertikal zur Längsachse der Kammer in diese eingeführt. In der Kammer befindet sich eine Vielzahl von übereinander angeordneten Lamellen 2, die horizontal angeordnet sind und sich von der einen Seitenfläche bis zur anderen Seitenfläche der Kammer erstrecken. Zwischen den Lamellen sind horizontale Strömungskanäle 15 ausgebildet, durch die der Belebtschlamm nach Einführung in die Kammer strömt. Es findet somit nach der Einführung des Belebtschlammes eine Strömungsrichtungsänderung um 90° statt. Diese Strömungskanäle 15 münden in einen lamellenfreien Endraum 7 der Kammer, in dem sich eine Schlammpumpe 6 befindet, mit der der Belebtschlamm durch die Kammer 1 gefördert wird. Die Schlammpumpe 6 fördert den Belebtschlamm in einen bei 5 gezeigten Schlammauslauf. Die Schlammpumpe 6 ist gleichzeitig als Rezirkulationspumpe ausgebildet, mittels der der konzentrierte Schlamm zum Schlammzulauf 4 zurückführt und von dort erneut durch die Kammer gefördert wird.

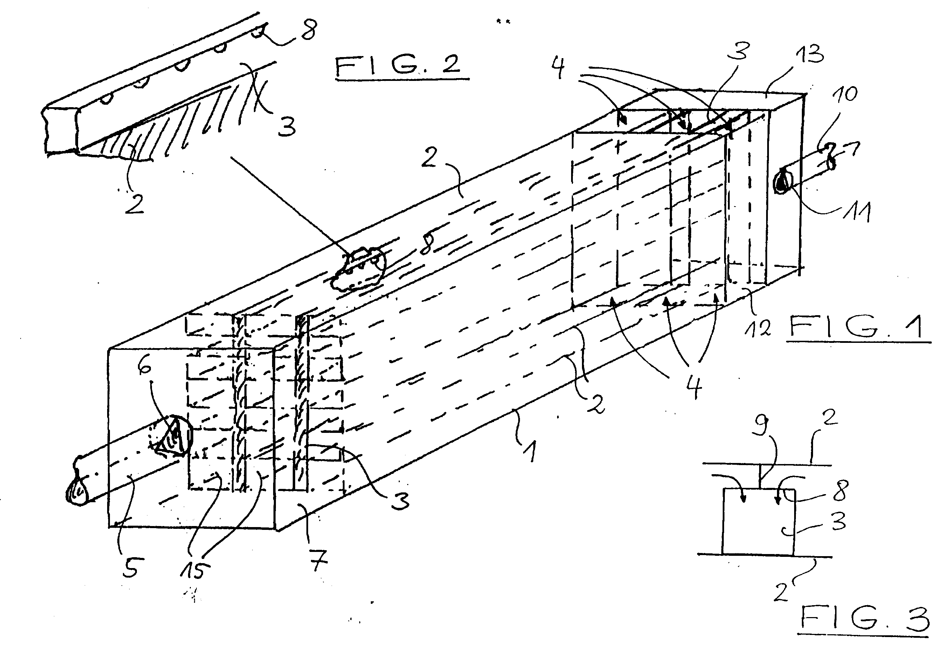

In jedem Zwischenraum zwischen zwei benachbarten übereinander angeordneten Lamellen 2 (Strömungskanal 15) befinden sich zwei Abzugsrohre 3 für die Klarphase des Belebtschlammes. Diese Abzugsrohre 3, die im Querschnitt ebenfalls rechteckig ausgebildet sind, dienen gleichzeitig als Lagereinrichtung und Abstandshalter für die Lamellen 2. Die Abzugsrohre 3 weisen, wie in der Detaildarstellung der Figur 2 gezeigt, im oberen Bereich ihrer Seitenflächen, Abzugsöffnungen 8 auf, die in gleichen Abständen über die Länge der Abzugsrohre angeordnet sind. Die Abzugsrohre 3 erstrecken sich am Schlammzulaufende der Kammer 1 durch den Zulaufbereich 12 hindurch und münden in eine von der Konzentrationskammer 1 getrennte Kammer 13 für die Klarphase, in der sich eine Abzugspumpe 11 für die Klarphase befindet, die diese in einen Klarphasenablauf 10 befördert.

Figur 3 zeigt eine Alternative in Bezug auf die Anordnung der Abzugsrohre 3 für die Klarphase. Bei dieser Ausführungsform sind die Abzugsöffnungen 8 auf der Oberseite des Rohres 3 angeordnet. Ferner befindet sich auf der Oberseite des Rohres ein Flansch 9, der die darüber befindliche Lamelle 2 lagert.

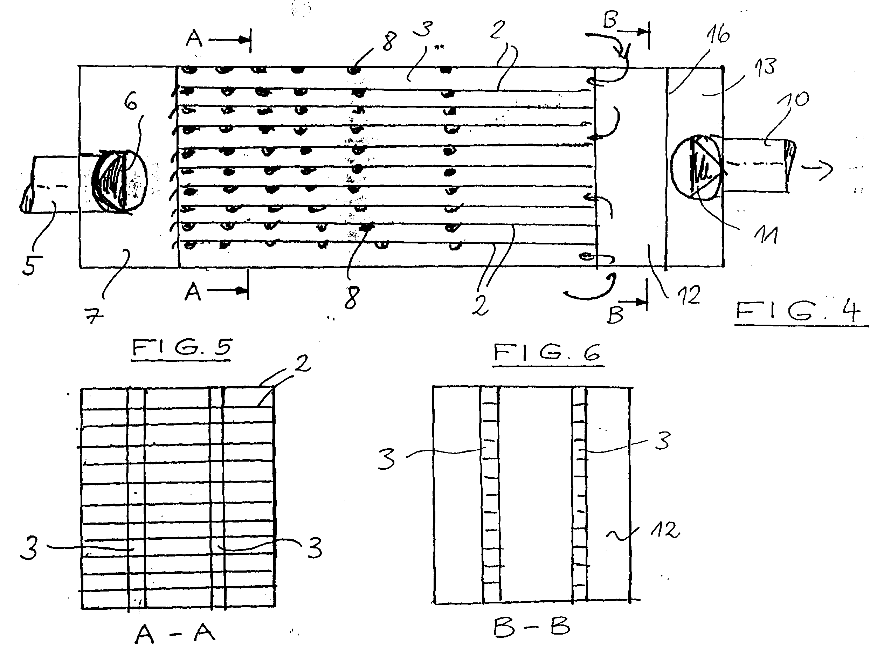

Figur 4 zeigt eine Seitenansicht der Vorrichtung der Figur 1 in teilweise schematischer Darstellung. Man erkennt, daß 10 Lamellen 2 übereinander angeordnet sind, wobei zwischen benachbarten Lamellen, wie in den Schnittansichten der Figuren 5 und 6 gezeigt, jeweils 2 Abzugskanäle 3 vorgesehen sind. Die Abzugskanäle sind jeweils übereinander angeordnet. Sie erstrecken sich durch den Schlammzulaufraum 12 bis zur Kammertrennwand 16 und münden dort in die zusätzliche Kammer 13. Dort wird die Klarphase gesammelt und über die Pumpe 11 und den Klarphasenablauf eingeführt.

Die Vorrichtung funktioniert folgendermaßen:

Belebtschlamm wird mit Hilfe der Schlammpumpe 6 angesaugt und über den Schlammzulauf 4 in die Kammer 1 eingeführt. Der Belebtschlamm strömt dann nach Umlenkung um 90° durch die jeweiligen Strömungskanäle 15 zwischen den einzelnen Lamellen parallel zur Horizontalebene der Kammer. Auf seinem Strömungsweg findet eine entsprechende Sedimentaion statt, wobei sich die Klarphase im oberen Teil eines jeden Strömungskanales 15 sammelt und von dort über die Abzugsöffnungen 8 mit Hilfe der Klarphasenpumpe 11 in die Abzugsrohre 3 abgezogen wird. Über die Abzugsrohre 3 wird die Klarphase in die Kammer 13 ausgetragen und von dort über den Klarphasenablauf 10 abgeführt. Der nunmehr eingedickte Belebtschlamm gelangt über die Strömungskanäle 15 in den lamellenfreien Raum 7 und wird von dort über den Schlammauslauf 5 abgeführt bzw. rezirkuliert.

Bei den vorgesehenen horizontal oder schwach geneigt angeordneten Lamellen handelt es sich vorzugsweise um Flachprofile. Alternativ können die Lamellen aber auch wannen- oder rinnenförmig ausgebildet sein. Hierbei ist eine Ausführungsform von Vorteil, bei der die Lamellen im Schnitt V-förmig ausgebildet sind und an den Enden der V-Schenkel ebene Abschnitte besitzen, so daß zwischen benachbarten V-förmigen Vertiefungen jeweils ein ebener Abschnitt vorgesehen ist, auf dem ein Abzugsrohr angeordnet sein kann.

Die Reinigung der Lamellen wird erfindungsgemäß vorzugsweise während der Betriebsphase durchgeführt. Das hat den Vorteil, daß die Vorrichtung nicht stillgelegt werden muß, um eine Reinigung durchzuführen. Um dies zu verwirklichen, ist vorzugsweise in Hauptströmungsrichtung vor oder hinter den Lamellen ein Strömungserzeuger (Rührwerk) angeordnet, mit dem die Strömungsgeschwindigkeit in der Vorrichtung bei Bedarf erhöhbar ist. Hierdurch kann ein Spüleffekt erzielt werden. Andere Reinigungseinrichtungen können ebenfalls Anwendung finden, wie beispielsweise mechanische Reinigungseinrichtungen (Bürsten), pneumatische Reinigungseinrichtungen (Lufteinperlung) etc.

## Patentansprüche

1. Vorrichtung zum Aufkonzentrieren von Belebtschlamm mit einer Kammer, durch die der Belebtschlamm geführt wird, die in einem Endbereich einen Belebtschlammzulauf und in einem andern Endbereich einen Auslauf für den konzentrierten Belebtschlamm aufweist, dadurch gekennzeichnet, daß in der Kammer (1) eine Vielzahl von mit Abstand voneinander angeordneten horizontalen oder schwach geneigten Lamellen (2) vorgesehen ist, deren Zwischenräume vom Belebtschlamm durchströmt werden, und daß zwischen den Lamellen (2) parallel zur Hauptströmungsrichtung Abzugsrohre (3) für die Klarphase angeordnet sind, die über ihre Länge jeweils mindestens eine Abzugsöffnung (8) für die Klarphase besitzen, auf der Auslaufseite oder Zulaufseite der Hauptströmung geschlossen und auf der gegenüberliegenden Seite offen sind.

2. Vorrichtung nach Anspruch 1, dadurch gekennzeichnet, daß die Abzugsrohre (8) für die Klarphase über den Kammerendbereich mit dem Schlammzulauf (4) hinaus verlängert sind und in eine von der Aufkonzentrationskammer (1) getrennte Kammer (13) münden.

3. Vorrichtung nach Anspruch 1 oder 2, dadurch , daß sie eine Pumpe (11) zum Abpumpen der Klarphase besitzt.

4. Vorrichtung nach einem der vorangehenden Ansprüche, dadurch, gekennzeichnet, daß ein Abzugsrohr (3) für die Klarphase eine Vielzahl von im Abstand voneinander angeordneten Abzugsöffnungen (8) aufweist.

5. Vorrichtung nach einem der vorangehenden Ansprüche, dadurch gekennzeichnet, daß die Abzugsrohre (3) für die Klarphase gleichzeitig als Abstandshalter für die Lamellen (2) dienen.

6. Vorrichtung nach einem der vorangehenden Ansprüche, dadurch gekennzeichnet, daß die Aufkonzentrationskammer (1) in ihrem Endbereich für den Schlammauslauf einen lamellenfreien Raum (7) aufweist.

7. Vorrichtung nach einem der vorangehenden Ansprüche, dadurch gekennzeichnet, daß sie eine die Hauptströmung erzeugende Schlammpumpe (6) besitzt.

8. Vorrichtung nach Anspruch 7, dadurch gekennzeichnet, daß die Schlammpumpe (8) gleichzeitig als Schlammrezirkulationspumpe ausgebildet ist.

9. Vorrichtung nach einem der vorangehenden Ansprüche, dadurch gekennzeichnet, daß sie in bestehende Anlagen einsetzbar ist.

10. Vorrichtung nach einem der vorangehenden Ansprüche, dadurch gekennzeichnet, daß sich der Querschnitt der zwischen den Lamellen (2) gebildeten Strömungskanäle (15) in Hauptströmungsrichtung verengt.

11. Vorrichtung nach einem der Ansprüche 4 bis 10, dadurch gekennzeichnet, daß sich der Abstand zwischen den Abzugsöffnungen (8) der Abzugsrohre (3) in Hauptströmungsrichtung verringert.

12. Vorrichtung nach einem der vorangehenden Ansprüche, dadurch gekennzeichnet, daß die Abzugsöffnungen (8)im oberen Bereich der Abzugsrohre (3) angeordnet sind.

13. Vorrichtung nach einem der vorangehenden Ansprüche, dadurch gekennzeichnet, daß in Hauptströmungsrichtung vor oder hinter den Lamellen ein Strömungserzeuger angeordnet ist, mit dem die Strömungsgeschwindigkeit in der Vorrichtung bei Bedarf erhöhbar ist.

14. Vorrichtung nach einem der vorangehenden Ansprüche, dadurch gekennzeichnet, daß die Lamellen wannen- oder rinnenförmig ausgebildet sind.
